(19) Europäisches Patentamt / European Patent Office / Office européen des brevets

(11) **EP 4 389 336 A1**

(12) **EUROPEAN PATENT APPLICATION**
published in accordance with Art. 153(4) EPC

(43) Date of publication:
**26.06.2024 Bulletin 2024/26**

(21) Application number: **22872426.6**

(22) Date of filing: **28.03.2022**

(51) International Patent Classification (IPC):
**B23K 9/12** *(2006.01)*     **B23K 9/095** *(2006.01)*

(52) Cooperative Patent Classification (CPC):
**B23K 9/095; B23K 9/12**

(86) International application number:
**PCT/JP2022/014987**

(87) International publication number:
**WO 2023/047667 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2021 JP 2021156168**

(71) Applicants:
• **KABUSHIKI KAISHA KOBE SEIKO SHO (KOBE STEEL, LTD.)**
  **Hyogo 651-8585 (JP)**

• **Kobelco Robotix Co., Ltd.**
  **Fujisawa-shi, Kanagawa 251-8551 (JP)**

(72) Inventors:
• **FURUKAWA, Naohide**
  **Fujisawa-shi, Kanagawa (JP)**
• **YANO, Takeshi**
  **Fujisawa-shi, Kanagawa (JP)**
• **KAWASAKI, Hirofumi**
  **Fujisawa-shi, Kanagawa (JP)**

(74) Representative: **Müller-Boré & Partner**
**Patentanwälte PartG mbB**
**Friedenheimer Brücke 21**
**80639 München (DE)**

(54) **WEAVING CONTROL METHOD, WELDING CONTROL DEVICE, WELDING SYSTEM, AND WEAVING CONTROL PROGRAM**

(57)     Provided is a weaving control method in which an operation can be performed in any weaving pattern. A welding control device includes a database that is constructed such that, when an information group including at least construction information, welding condition information, and weaving information is set as welding information, a control reference item selected from at least one item in the welding information and a control item selected from at least one item in the welding information are associated and stored for every standard item selected from at least one item in the welding information, and the control item includes at least an offset amount for changing a direction and a distance of at least one predetermined point in one cycle of a weaving reference trajectory in the weaving information. The weaving control method using the welding control device includes a step of extracting at least the offset amount from the database based on an input measured value of the control reference item.

FIG. 6

TYPE OF WEAVING PATTERN: OBLIQUE SWING     (STANDARD ITEM)

| (CONTROL REFERENCE ITEM) < WIRE A > | TILT ANGLE α = 45°, PITCH p = 3.0 mm | | | | TILT ANGLE α = 50°, PITCH p = 3.0 mm | | | | TILT ANGLE α = 55°, PITCH p = 3.0 mm | | | | |
|---|---|---|---|---|---|---|---|---|---|---|---|---|---|
| GAP [mm] | 9 | 7 | 5 | 3 | 9 | 7 | 5 | 3 | 9 | 7 | 5 | 3 | |
| WELDING CURRENT [A] | a1 | a2 | a3 | a4 | a5 | a6 | a7 | a8 | a9 | a10 | a11 | a12 | |
| ARC VOLTAGE [V] | b1 | b2 | b3 | b4 | b5 | b6 | b7 | b8 | b9 | b10 | b11 | b12 | |
| WELDING SPEED [mm / min] | c1 | c2 | c3 | c4 | c5 | c6 | c7 | c8 | c9 | c10 | c11 | c12 | ... |
| OFFSET AMOUNT [mm] | d1 | d2 | d3 | d4 | d5 | d6 | d7 | d8 | d9 | d10 | d11 | d12 | |
| WEAVING AMPLITUDE [mm] | e1 | e2 | e3 | e4 | e5 | e6 | e7 | e8 | e9 | e10 | e11 | e12 | |
| END STOP TIME (BOTTOM PLATE) [ms] | f1 | f2 | f3 | f4 | f5 | f6 | f7 | f8 | f9 | f10 | f11 | f12 | |
| END STOP TIME (STANDING PLATE) [ms] | g1 | g2 | g3 | g4 | g5 | g6 | g7 | g8 | g9 | g10 | g11 | g12 | |

(CONTROL ITEM)

(CONT.)

EP 4 389 336 A1

**Description**

TECHNICAL FIELD

The present invention relates to a weaving control method, a welding control device, a welding system, and a weaving control program in which a simple welding device including a driving portion such as a portable welding robot or a carriage is controlled.

BACKGROUND ART

In manufacturing a welded structure in shipbuilding, a steel frame, a bridge, or the like, welding conditions, weaving conditions, and the like need to change to appropriate conditions depending on construction situations. Weaving generally refers to swinging of a welding torch in a groove width direction of a weld joint, and is also called "oscillating" or "moving". In particular, when welding at a difficult position such as a vertical position or a horizontal position is normally performed, while utilizing a special weaving pattern, various conditions such as a welding speed need to appropriately change depending a gap variation of a groove caused by misalignment. Such delicate welding is likely to be manually performed. However, from the viewpoints of manpower saving and construction efficiency improvement, automation is required. The weaving pattern is also generally called "weaving trajectory" or "moving pattern" and refers to a trajectory that is formed by weaving.

Regarding the automation, for example, an object of the invention described in Patent Literature 1 is to provide a control device and a control method thereof that can appropriately control an operation of a robot when a real time situation is changed. To control an operation of a robot in a working space, Patent Literature 1 discloses that a main moving path of the robot in the working space is determined, a unit motion forming the determined main moving path is generated, a weaving motion that dynamically changes offset while performing a continuous motion in which unit motions are connected is generated, a compensation displacement or a compensation rotation amount determined according to a work environment are generated, and a position and a rotation amount of the robot in the working space are calculated according to at least one of the unit motion, the weaving motion, the compensation displacement, and the compensation rotation amount.

CITATION LIST

PATENT LITERATURE

PATENT LITERATURE 1: JP2014-534083A

SUMMARY OF INVENTION

TECHNICAL PROBLEM

However, the robot described in Patent Literature 1 is a multi-axis robot that has coordinate axes, and has a problem in that the application thereof to site welding in building construction or the like is difficult. For the automation of site welding, the use of a simple welding device including a driving portion such as a portable welding robot or a carriage is the mainstream. However, since the simple welding device does not include both a high-accuracy coordinate axis and a high-accuracy manipulator, it is difficult to apply a special weaving pattern or to change a weaving pattern depending on situations.

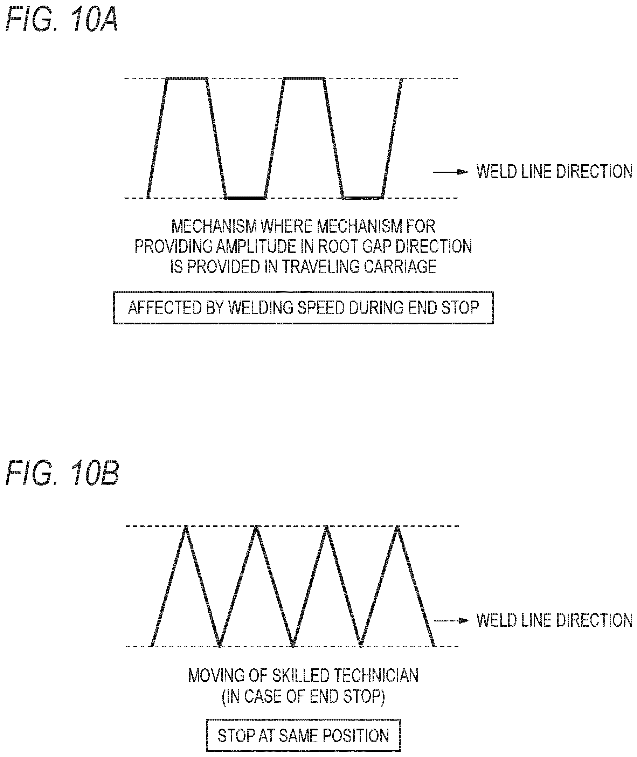

When end stop is performed during weaving, even the multi-axis robot is affected by a welding speed, and, for example, a square weaving pattern illustrated in Fig. 10A is formed, which may adversely affect a bead shape. On the other hand, for example, when end stop is performed while maintaining a triangular weaving pattern illustrated in Fig. 10B, molten pool is likely to be stabilized, which contributes to improvement of a bead shape. However, such configuration is difficult to implement without manual welding that easily adjusts weaving in response to the effect of a welding speed. Therefore, for the automation of site welding where manual welding is currently mainly used, a technique of maintaining any weaving pattern by adjusting weaving in response to the effect of a welding speed is desired.

The present invention has been made considering the above-described problems, and an object thereof is to provide a weaving control method, a welding control device, a welding system, and a weaving control program, in which, even when a simple welding device including a driving portion such as a portable welding robot or a carriage is used, an operation can be performed in any weaving pattern.

SOLUTION TO PROBLEM

Accordingly, the above-described object of the present invention is achieved by the following configuration of [1] relating to the weaving control method.

[1] A weaving control method using a welding control device for controlling a welding device, in which

the welding control device includes a database that is constructed such that,
when an information group including at least construction information, welding condition information, and weaving information is set as welding information,
a control reference item selected from at least one item in the welding information and a control item selected from at least one item in the welding information are associated and stored for every standard item selected from at least one item in the welding information, and

the control item includes at least an offset amount for changing a direction and a distance of at least one predetermined point in one cycle of a weaving reference trajectory in the weaving information,

the standard item, the control reference item, and the control item are items in the welding information that are different from each other, and

the weaving control method includes a step of extracting at least the offset amount from the database based on an input measured value of the control reference item.

The above-described object of the present invention is achieved by the following configuration of [2] relating to the welding control device.

[2] A welding control device for controlling a welding device, in which

the welding control device includes a database that is constructed such that,

when an information group including at least construction information, welding condition information, and weaving information is set as welding information,

a control reference item selected from at least one item in the welding information and a control item selected from at least one item in the welding information are associated and stored for every standard item selected from at least one item in the welding information, and

the control item includes at least an offset amount for changing a direction and a distance of at least one predetermined point in one cycle of a weaving reference trajectory in the weaving information,

the standard item, the control reference item, and the control item are items in the welding information that are different from each other, and

the welding control device has a function of extracting at least the offset amount from the database based on an input measured value of the control reference item.

The above-described object of the present invention is achieved by the following configuration of [3] relating to the welding system.

[3] A welding system including a welding control device for controlling a welding device, in which

the welding control device includes a database that is constructed such that,

when an information group including at least construction information, welding condition information, and weaving information is set as welding information,

a control reference item selected from at least one item in the welding information and a control item selected from at least one item in the welding information are associated and stored for every standard item selected from at least one item in the welding information, and

the control item includes at least an offset amount for changing a direction and a distance of at least one predetermined point in one cycle of a weaving reference trajectory in the weaving information,

the standard item, the control reference item, and the control item are items in the welding information that are different from each other, and

the welding control device has a function of extracting at least the offset amount from the database based on an input measured value of the control reference item.

The above-described object of the present invention is achieved by the following configuration of [4] relating to the weaving control program.

[4] A weaving control program causing a welding control device for controlling a welding device to perform a weaving control, in which

the welding control device includes a database that is constructed such that,

when an information group including at least construction information, welding condition information, and weaving information is set as welding information,

a control reference item selected from at least one item in the welding information and a control item selected from at least one item in the welding information are associated and stored for every standard item selected from at least one item in the welding information, and

the control item includes at least an offset amount for changing a direction and a distance of at least one predetermined point in one cycle of a weaving reference trajectory in the weaving information,

the standard item, the control reference item, and the control item are items in the welding information that are different from each other, and

the weaving control program causes the welding control device to execute a function of extracting at least the offset amount from the database based on an input measured value of the control reference item.

ADVANTAGEOUS EFFECTS OF INVENTION

With the weaving control method, the welding control device, the welding system, and the weaving control program according to the present invention, even when a simple welding device including a driving portion such as a portable welding robot or a carriage is used, welding can be performed in any weaving pattern, and the configuration is applicable to various construction situations such as welding at a difficult position such as a vertical position or a horizontal position.

BRIEF DESCRIPTION OF DRAWINGS

Fig. 1 is a schematic diagram illustrating one embodiment of a welding system according to the present invention.
Fig. 2 is a schematic side view illustrating a portable welding robot illustrated in Fig. 1.
Fig. 3 is a perspective view illustrating the portable welding robot illustrated in Fig. 2.
Fig. 4 is an example of a flowchart of a weaving control program according to the present embodiment.
Fig. 5 is an explanatory drawing illustrating a weaving reference trajectory.
Fig. 6 is a table illustrating an example of a database regarding various items of a standard item, a control reference item, and a control item that are organized by a higher-level classification and a lower-level classification.
Fig. 7 is a diagram illustrating an oblique swing type weaving pattern when one weaving end is offset to a negative side in an X-axis direction with respect to the weaving reference trajectory.
Fig. 8A is a diagram illustrating a standard weaving pattern for describing oblique special weaving.
Fig. 8B is a diagram illustrating an oblique special weaving pattern when a weaving end on a bottom plate side is offset to a positive side in the X-axis direction.
Fig. 8C is a diagram illustrating the oblique special weaving pattern when the weaving end on the bottom plate side is offset to the negative side in the X-axis direction.
Fig. 9A is a standard weaving pattern for describing V-shaped special weaving.
Fig. 9B is a diagram illustrating a V-shaped special weaving pattern when weaving intermediate positions in the standard weaving pattern are offset to the negative side in the X-axis direction.
Fig. 9C is a diagram illustrating a V-shape special weaving pattern when the weaving intermediate positions in the standard weaving pattern are offset to the positive side in a Z-axis direction.
Fig. 10A is a diagram illustrating a square weaving pattern that is formed due to the effect of a welding speed when end stop is performed during weaving.
Fig. 10B is a diagram illustrating a triangular weaving pattern that is performed by a skilled technician.

DESCRIPTION OF EMBODIMENTS

Hereinafter, an embodiment relating to a weaving control method according to the present invention will be described in detail based on the drawings. The present embodiment is one example where a "portable welding robot" is used as a welding device, and the present invention is not limited to the configuration of the present embodiment. For example, a simple welding device including a driving portion such as a carriage may be used as the welding device instead of the portable welding robot.

<Configuration of Welding System>

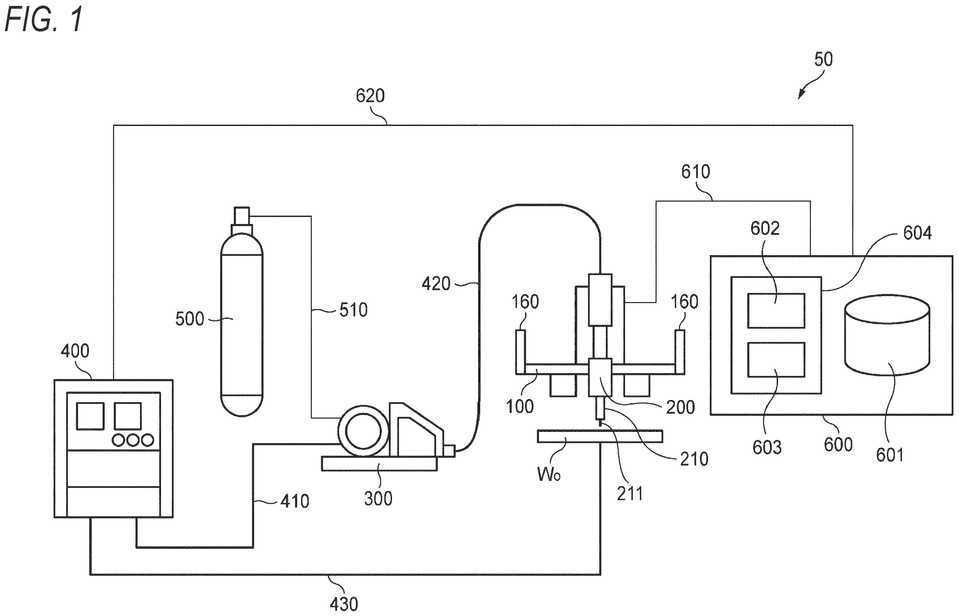

Fig. 1 is a schematic diagram illustrating a configuration of the welding system according to the present embodiment. As illustrated in Fig. 1, a welding system 50 includes a portable welding robot 100 that is an example of the welding device, a feeding device 300, a welding power supply 400, a shielding gas supply source 500, and a welding control device 600.

[Welding Control Device]

The welding control device 600 is connected to the portable welding robot 100 through a robot control cable 610, and is connected to the welding power supply 400 through a power control cable 620. The welding control device 600 includes a data storage unit 601 that stores data as welding information, for example, construction information, welding condition information, and weaving information such as an operation pattern, a welding start position, and a welding end position of the portable welding robot 100, and a database for weaving control described below (hereinafter, also referred to as "DB for weaving control"). The welding control device 600 transmits an instruction to the portable welding robot 100 and the welding power supply 400 based on the data to control an operation and welding conditions of the portable welding robot 100.

The welding control device 600 includes: a groove shape information calculation unit 602 that calculates groove shape information from detection data acquired by sensing described below; and a weaving condition acquisition unit 603 that determines weaving based on the groove shape information and various types of data of the data storage unit 601. A control unit 604 is configured to include the groove shape information calculation unit 602 and the weaving condition acquisition unit 603. The control unit 604 may include a welding condition acquisition unit that corrects and acquires the welding conditions of the data based on the groove shape information, or the weaving condition acquisition unit 603 and the welding condition acquisition unit may be configured to be integrated.

The welding control device 600 is configured such that a controller for performing teaching and a controller that has other control functions are integrated. Note that the welding control device 600 is not limited thereto, and may be divided into a plurality of controllers by function, for example, into two controllers including a controller for performing teaching and a controller having other control functions, and the portable welding robot 100 may include the welding control device 600. In the present embodiment, a signal is transmitted using the robot control cable 610 and the power control cable 620. However, the present invention is not limited thereto, and a signal may be transmitted wirelessly. From the viewpoint of workability in a welding site, it is preferable that the welding control device 600 is divided into two controllers including a controller for performing teaching and a controller that has other control functions.

[Welding Power Supply]

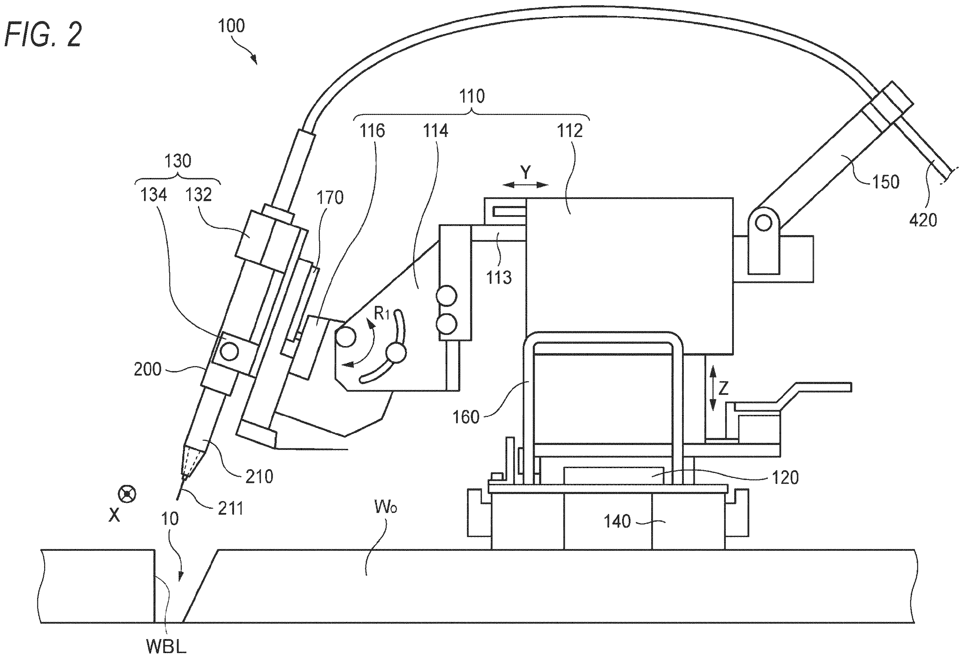

The welding power supply 400 supplies electric power to a consumable electrode (hereinafter, also referred to as "welding wire") 211 and a workpiece Wo to generate an arc between the welding wire 211 and the workpiece Wo in response to an instruction from the welding control device 600. Electric power from the welding power supply 400 is transmitted to the feeding device 300 through a power cable 410, and is transmitted from the feeding device 300 to a welding torch 200 through a conduit tube 420. As illustrated in Fig. 2, the power is supplied to the welding wire 211 through a contact tip at a tip of the welding torch 200. A current during welding work may be any of a direct current or an alternating current, and a waveform thereof is not particularly limited. Accordingly, the current may be a pulse such as a square wave or a triangular wave.

In the welding power supply 400, for example, the power cable 410 is connected to the welding torch 200 side as a positive (+) electrode, and a power cable 430 is connected to the workpiece Wo as a negative (-) electrode. Here, welding with reverse polarity is performed. When welding with straight polarity is performed, the welding power supply 400 may be connected to the workpiece Wo through the positive power cable, and may be connected to the welding torch 200 side through the negative power cable.

[Shielding Gas Supply Source]

The shielding gas supply source 500 is configured by a container in which shielding gas is sealed and an additional member such as a valve. The shielding gas is transmitted from the shielding gas supply source 500 to the feeding device 300 through a gas tube 510. The shielding gas transmitted to the feeding device 300 is transmitted from the feeding device 300 to the welding torch 200 through the conduit tube 420. The shielding gas transmitted to the welding torch 200 flows in the welding torch 200, is guided to a nozzle 210, and is ejected from the tip side of the welding torch 200. Examples of the shielding gas used in the present embodiment include argon (Ar) as inert gas and carbon dioxide gas ($CO_2$) as activated gas. The shielding gas is not limited to a single gas, and a mixed gas thereof may be used. Examples of inert gas other than Ar include helium (He). Examples of activated gas other than $CO_2$ include hydrogen ($H_2$), nitrogen ($N_2$), and oxygen ($O_2$).

[Feeding Device]

The feeding device 300 unwinds the welding wire 211 and feeds the welding wire 211 to the welding torch 200. The welding wire 211 fed by the feeding device 300 is not particularly limited, and is selected depending on properties, welding configurations, and the like of the workpiece Wo. For example, a solid wire or a flux cored wire is used. A material of the welding wire is also not particularly limited and may be, for example, mild steel, stainless steel, aluminum, or titanium. A wire diameter of the welding wire 100 is also not particularly limited.

In the conduit tube 420 according to the present embodiment, a conductive path for functioning as a power cable is formed on an outer skin side of the tube, a protective tube that protects the welding wire 211 is disposed in the tube, and a flow path of the shielding gas is formed. Note that the conduit tube 420 is not limited thereto. For example, a bundle in which a power supply cable or a shielding gas supply hose is bundled around the protective tube for feeding the welding wire 211 to the welding torch 200 can also be used. For example, the tube for feeding the welding wire 211 and the shielding gas and the power cable can also be individually provided.

[Portable Welding Robot]

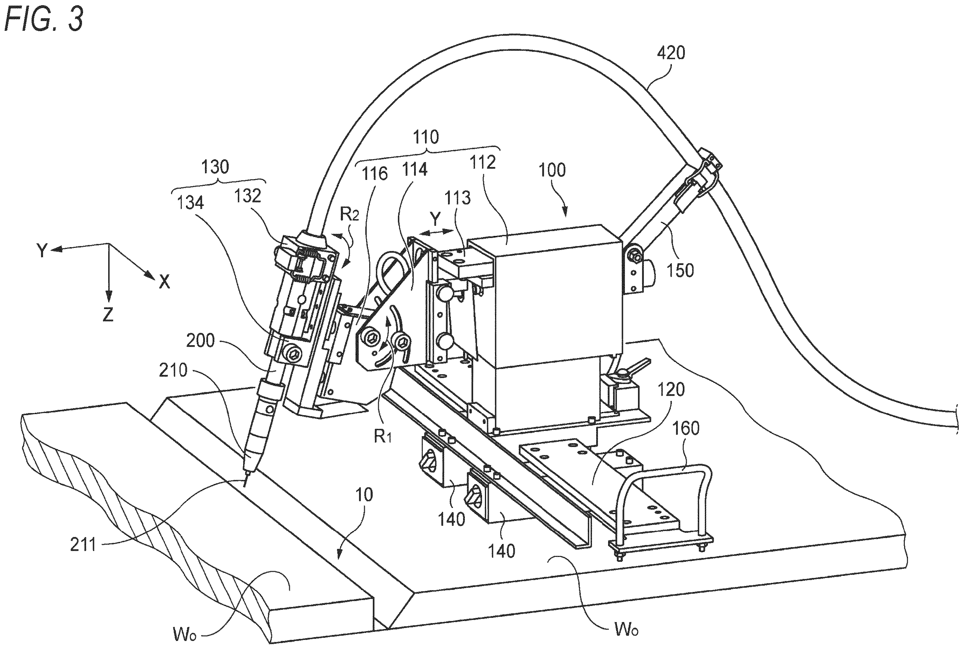

As illustrated in Figs. 2 and 3, the portable welding robot 100 includes: a guide rail 120; a robot body 110 that is provided on the guide rail 120 and moves along the guide rail 120; and a torch connection portion 130 that is placed on the robot body 110. The robot body 110 is mainly configured by a body portion 112 that is provided on the guide rail 120, a fixed arm portion 114 that is attached to the body portion 112, and a movable arm portion 116 that is attached to the fixed arm portion 114 to be rotatable in an arrow $R_1$ direction.

The torch connection portion 130 is attached to the movable arm portion 116 through a crank 170. The torch connection portion 130 includes a torch clamp 132 and a torch clamp 134 that fix the welding torch 200. On a side of the body portion 112 opposite to the side where the welding torch 200 is mounted, a cable clamp 150 that supports the conduit tube 420 connecting the feeding device 300 and the welding torch 200 is provided.

In the present embodiment, a voltage is applied between the workpiece Wo and the welding wire 211, and a touch sensor that senses a surface of a groove 10 or the like using a voltage drop phenomenon occurring when the welding wire 211 comes into contact with the workpiece Wo is used as detection means. The detection means is not limited to the touch sensor according to the present embodiment, and a visual sensor, an arc sensor, a laser sensor, or the like or a combination of such detection means may be used. For the convenience of the device configuration, the touch sensor according to the present embodiment is preferably used. To obtain the construction information during welding, it is more preferable to use the visual sensor in addition to the touch sensor.

In the present embodiment, using the visual sensor (not illustrated) other than the touch sensor, the construction information during welding, specifically, for example, a tip width of the molten pool is input to the control unit 604 as a value of a gap.

In the body portion 112 of the robot body 110, as indicated by an arrow X in Fig. 2, the robot body 110 can be driven in an X-axis direction in which the robot body 110 moves along the guide rail 120. The body portion 112 can also be driven in a Z direction in which the body portion 112 moves in a depth direction of the groove 10 perpendicular to the X-axis direction. The fixed arm portion 114 can be driven in a Y-axis direction that is a width direction of the groove 10 perpendicular to the X-axis direction through the slide support portion 113 with respect to the body portion 112.

The torch connection portion 130 to which the welding torch 200 is connected can swing back and forth in the X-axis direction by the crank 170 rotating as indicated by an arrow $R_2$ of Fig. 3. As indicated by an arrow $R_1$, the movable arm portion 116 is rotatably attached to the fixed arm portion 114, and can be adjusted and fixed to an optimum angle.

As described above, the robot body 110 can drive the welding torch 200 provided at a tip portion thereof with three degrees of freedom. Note that the robot body 110 is not limited thereto and can be driven with any number of degrees of freedom depending on uses.

With the above-described configuration, the tip portion of the welding torch 200 attached to the torch connection portion 130 can be directed to any direction. The robot body 110 can be driven on the guide rail 120 in the X-axis direction in Fig. 2. While the welding torch 200 reciprocates in the Y-axis direction, the robot body 110 moves in the X-axis direction. As a result, weaving welding can be performed. With the driving by the crank 170, the welding torch 200 can be tilted depending on, for example, a construction situation such as providing a push angle or drag angle.

Below the guide rail 120, for example, an attachment member 140 such as a magnet is provided, and the guide rail 120 is configured to be easily attached to and detached from the workpiece Wo by the attachment member 140. When the portable welding robot 100 is set on the workpiece Wo, an operator grips both handles 160 of the portable welding robot 100 such that the portable welding robot 100 can be easily set on the workpiece Wo.

<Weaving Control Method>

Next, a weaving control method using the welding control device 600 in the welding system 50 according to the present embodiment will be described in detail.

When the groove 10 is welded, welding information during welding is set or acquired before the start of welding to implement gas shielded arc welding.

"Welding information" described herein is a collective term for an information group including the construction information, the welding condition information, and the weaving information. Examples of information other than the construction information, the welding condition information, and the weaving information include environment information including information of items such as temperature or humidity and welding phenomenon information including information of items such as spatter or a fume amount.

A gap, a sheet thickness, a welding material, shielding gas species, base metal, a weld length, and the like are examples of items configuring "construction information". A welding current, an arc voltage, a welding speed, a shielding gas flow rate, and the like are examples of items configuring "welding condition information". A pitch described below, a weaving width, a weaving cycle, a weaving end stop time, a position of a weaving reference line, an element relating to a weaving pattern, an offset amount described below, and the like are examples of items configuring "weaving information".

Here, the element relating to the weaving pattern varies depending on a type of the weaving pattern. For example, when the type of the weaving pattern is oblique swing, a tilt angle described below corresponds to the element.

As a process until the welding information is acquired, for example, items such as the kind of the welding wire or the kind of the shielding gas in the construction information can be set depending on the construction situation to determine a welding mode. Based on an operation signal of the welding control device 600, the robot body 110 is driven to start automatic sensing of a groove shape using the touch sensor. The groove shape information is calculated, and the welding conditions, the weaving conditions, and the like are acquired or the welding conditions, the weaving conditions, and the like that are set in advance are corrected based on the groove shape information and a database for condition acquisition and correction (hereinafter, also referred to as "DB for condition acquisition and correction") that is prepared in advance.

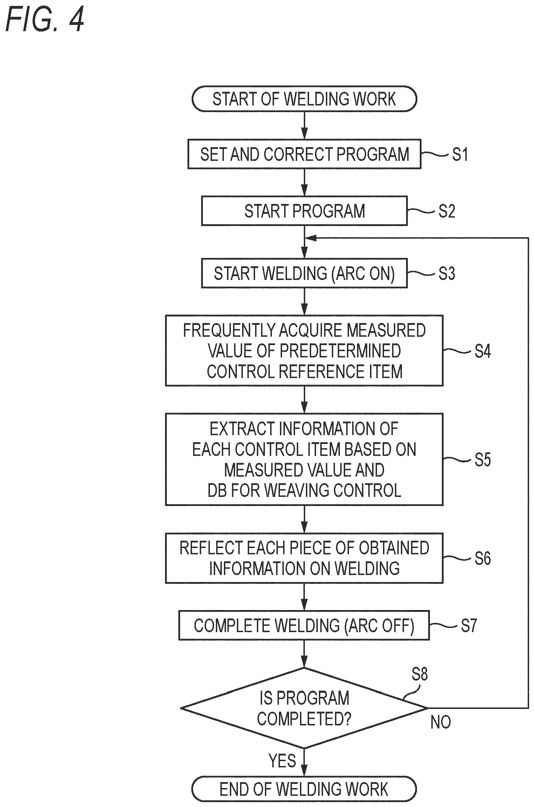

Hereinafter, specific steps will be described with reference to Fig. 4. Fig. 4 is an example of a flowchart of a weaving control program according to the present embodiment. First, the entire flow will be described.

In Fig. 4, as illustrated in Step S1 after the start of welding work, a program is set and corrected as a preparation before welding. Next, after starting the program as illustrated in Step S2, the welding starts (arc on) as illustrated in Step S3, and a measured value of a predetermined control reference item is frequently acquired by a visual sensor, an arc sensor, or the like as illustrated in Step S4. Next, as illustrated in Step S5, information of each of control items associated with the control reference item in a predetermined DB for weaving control described below is extracted based on the acquired measured value of the control reference item and the DB for weaving control. Next, after the extraction of the information of each of the control items, each piece of the obtained information is reflected to perform welding as illustrated in Step S6. Next, after the completion of welding (arc off) as illustrated in Step S7, whether the program is completed is determined, that is, whether the welding of all the steps determined by the program is completed is determined as illustrated in Step S8. When the program is not completed, the process returns to Step S3, and the operations of Step S3 to S7 are repeated.

"Completion of the program" in Step S8 refers to completion of welding at all the positions from the welding start position to the welding end position that is predetermined by the program. In multi-layer welding," completion of the program" refers to completion of welding in all the layers at each of the positions, and the operations of Steps S3 to S7 are repeated until the welding of all the layers is completed. When the completion of the program is determined in Step S8, the welding work ends.

[Program Setting and Correction]

A welding method or a welding position is determined depending on a construction situation, a teaching program includes each of a set value of, for example, the kind of the welding wire or the kind of the shielding gas as an item of the information in "construction information", a set value of, for example, the welding current, the arc voltage, or the welding speed as an item of the information in "welding condition information", and a set value, for example, the pitch, a weaving frequency, or the weaving pattern as an item of the information in "weaving information", and the teaching program data is input to the data storage unit 601 in the welding control device 600.

The set values may be set to the teaching program through a teaching device or the like by a worker, or may be set through CAD data or various sensors.

In the present embodiment, the teaching program of the portable welding robot 100 includes various set values in advance, the set values are acquired or corrected based on information obtained by the touch sensor described below and the DB for condition acquisition and correction, the predetermined control reference item is observed during welding by the visual sensor, the arc sensor, or the like, and welding is performed while controlling the predetermined control items based on the value of the control reference item.

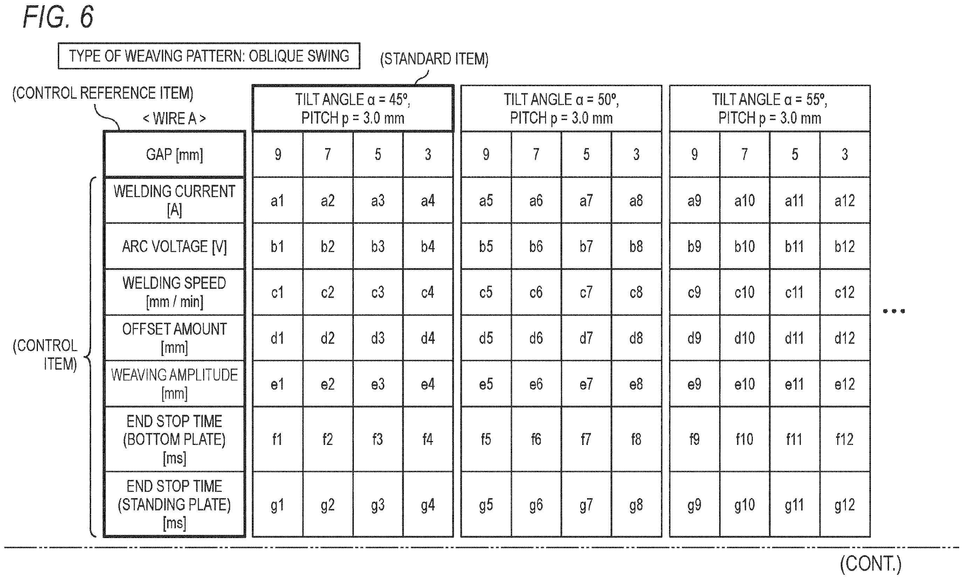

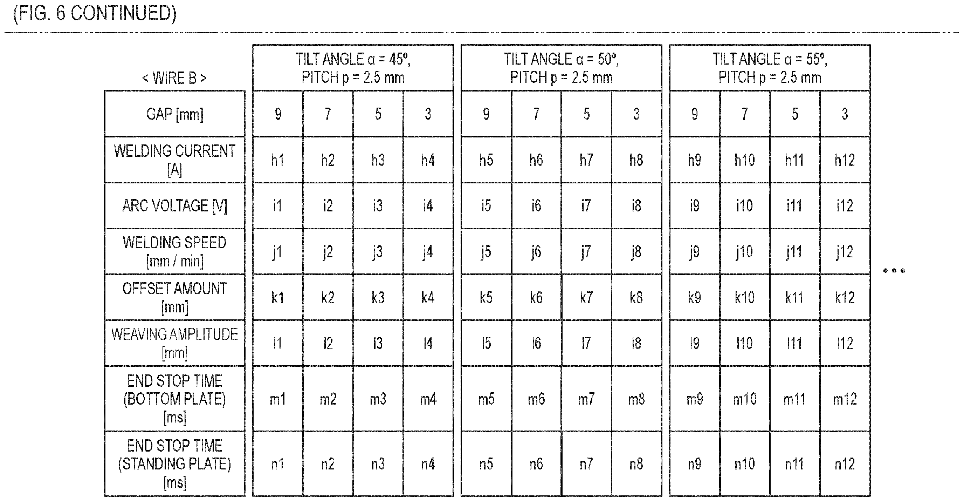

In the present embodiment, the gap is selected as "control reference item", and items below the gap illustrated in Fig. 6, that is, the welding current, the arc voltage, the welding speed, the offset amount described below, and various weaving conditions are selected as "control item". That is, based on the value of the gap measured by the visual sensor, the welding current, the arc voltage, the welding speed, the offset amount described below, and various weaving conditions are controlled.

The weaving pattern may be set in advance in the teaching program as described above. For example, in the horizontal position, an oblique swing type weaving pattern may be set in the first layer of welding, and a weaving reference trajectory, that is, a standard weaving pattern may be set in layers of welding other than the first layer in the teaching program of the portable welding robot 100. Even without setting the weaving pattern in advance in the teaching program, the conditions may be acquired based on the information obtained by the touch sensor and the DB for condition acquisition and correction.

When an industrial robot is used, the weaving pattern is generally determined depending on the amplitude and cycle of weaving and the welding speed. Therefore, when speed control is performed with one weld length, the weaving pattern changes depending on a speed change by the control. For example, the square weaving illustrated in Fig. 10A and the triangular weaving pattern illustrated in Fig. 10B may be mixed. In the present embodiment, "weaving reference trajectory" described below is determined in advance, the weaving pattern is generated based on the weaving reference trajectory, and "control item" that is selected in advance is controlled such that the generated weaving pattern is formed.

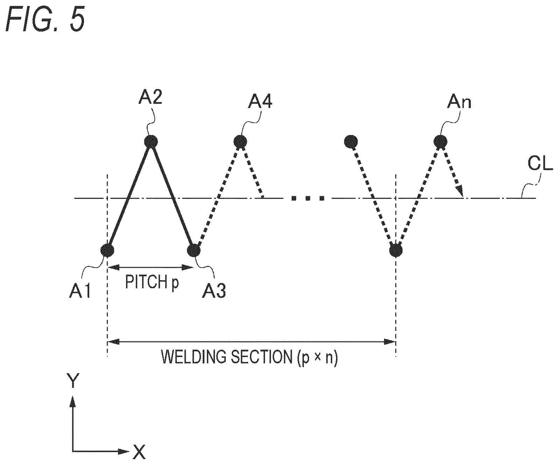

As illustrated in Fig. 5, "weaving reference trajectory" is formed as a combined trajectory of movement of the portable welding robot 100 in the X-axis direction at a constant speed and movement of the welding torch 200 in the Y-axis direction at a constant speed, and is a trajectory where basic units are continuous, in which the basic unit is an isosceles triangle passing through weaving ends A1, A2, and A3. A distance between the weaving ends A1 and A3 adjacent to each other on one side with respect to a weld center line CL is set as a pitch p. Accordingly, the product of the pitch p and the number n of the basic units repeated, that is, $p \times n$ is a welding section. As described above, the weaving information includes the items of the pitch and the like that are the elements configuring the weaving reference trajectory.

[Sensing Step Before or During Welding]

A sensing step before the start of welding is performed by touch-sensing a groove shape, a sheet thickness, starting and terminal ends, and the like using the above-described touch sensor. After the sensing step, a groove shape information calculation step of calculating the groove shape information, for example, a groove angle of a groove shape, a sheet thickness, a gap, and a distance between workpiece end portions from detection data of a groove cross-sectional shape at each of groove shape detection positions obtained in the sensing step is performed. Based on the data obtained in the groove shape information calculation step and the DB for condition acquisition and correction, the setting conditions in the teaching program data are corrected or acquired. In the present embodiment, for example, the conditions of the weaving reference trajectory or the welding conditions are corrected or acquired.

In a sensing step during welding, the groove shape information such as the gap is mainly sensed by the above-described visual sensor. Specifically, the visual sensor is provided on the front side in a welding direction, the welding wire and the molten pool are imaged entirely in the obtained image, and the gap is calculated from behavior of the molten pool. More specifically, a distance between tips of the molten pool is calculated as the gap.

In the present embodiment, the gap obtained by the visual sensor is used as "control reference item" described below, and the conditions for generating the trajectory of the selected weaving pattern or the welding conditions are controlled based on the DB for weaving control described below and the gap that is frequently input by the visual sensor, the conditions or the welding conditions being associated with the gap and stored in advance in the DB for weaving control as the control items described below.

As the control item in initial setting conditions that are set before welding and the DB for weaving control, the offset amount for changing a direction and a distance of at least one predetermined point in one cycle of the weaving reference trajectory is included. The reason is that the offset amount is an essential item for generating the weaving pattern.

When the offset amount includes the information regarding the direction and the distance, the weaving is called "special weaving". When the offset amount is zero, the weaving is the predetermined weaving reference trajectory as it is and is called "standard weaving".

[Configuration of DB for Weaving Control]

In the DB for weaving control, at least one item selected from the welding information that is the information group including the construction information, the welding condition information, and the weaving information is selected as "standard item", and at least "control reference item" as a reference for control that is selected from at least one item in the welding information and "control item" as a corresponding phase for control that is selected from at least one item in the welding information are included for one standard item or for every combination of a plurality of standard items. The items selected from the welding information as "standard item", "control reference item, and "control item" are different from each other.

In the present embodiment, as illustrated in Fig. 6, "tilt angle" and "pitch" that are the items in the weaving information and the elements relating to the weaving pattern are selected as "standard item", "gap" is selected as "control reference item", and "welding current", "arc voltage", "welding speed", "offset amount", "weaving amplitude", and "end stop time" are selected as "control item".

The present invention is not limited to the aspect of the present embodiment. For example, in the DB for weaving control illustrated in Fig. 6, "welding speed" that is an item in the welding condition information may be selected as the standard item instead of the pitch, and "pitch" may be selected as the control item instead of the welding speed. However, considering the easiness of control, it is preferable that two items including an element relating to the weaving pattern and an element relating to the weaving reference trajectory are selected as the standard items, specifically, two items of "tilt angle" as the element relating to the weaving pattern and "pitch" as the element relating to the weaving reference trajectory are selected as the standard items as in the present embodiment. It is preferable to construct the DB for weaving control, for example, to select "gap" as the control reference item as in the present embodiment.

Here, examples of the item of the construction information include the kind of the welding material such as a product number or a brand, properties of the welding material such as a composition, a wire diameter, or whether a plating is provided, the kind or properties of the base metal, a groove shape, a protrusion length, and shielding gas species. Examples of the item of the welding condition information include the welding current, the arc voltage, and the welding speed. Examples of the item of the weaving information include the pitch, the gap, the weaving amplitude, the end stop time, the weaving reference position, the weaving frequency, the element relating to the weaving pattern, and the offset amount described below.

In the DB for weaving control configured as described above, from the viewpoint of easiness of the management of conditions or condition extraction, in Fig. 6, as illustrated in <Wire A> or <Wire B> in the type of "Oblique Swing Weaving Pattern" as the higher-level classification, for example, the type of the weaving pattern may be set as the highest-level classification, and the DB for weaving control may be classified for every kind of the welding material as the next level. Conversely, the kind of the welding material may be set as the highest-level classification, and the DB for weaving control may be classified for every type of the weaving pattern as the next level.

In addition to such configuration, the DB for weaving control may be classified for every shielding gas species as the higher-level classification. From the viewpoint of the easiness of the management of conditions or condition extraction, it is more preferable that one of the type of the weaving pattern, the kind of the welding material, shielding gas species, and the like or a combination thereof is set as the higher-level classification. The type of the weaving pattern is a concept indicating a type such as triangular swing, sinusoidal swing, or oblique swing in a broad sense.

The description will be made referring back to Fig. 4. As described above, the information regarding the gap extracted by at least visual sensing is input during welding, and at least the offset amount is controlled based on the constructed DB for weaving control. It is preferable that the welding current, the arc voltage, the welding speed, the offset amount, the weaving amplitude, or the end stop time is used as other control items. Here, it is preferable that not only the offset amount but also the welding speed are used as the control item.

That is, in Fig. 6, an optimum value of the control item is determined for each of the gaps of 9 mm, 7 mm, 5 mm, and 3 mm. For example, when the gap of 5 mm is input by the visual sensor during welding under a condition of the gap of 3 mm, the numerical value of the control item is controlled such that optimum conditions of the gap of 5 mm are satisfied. Here, when the control item to be controlled based on the gap variation is "offset amount", the predetermined weaving pattern can be maintained by controlling the offset amount. When the control item to be controlled is "welding speed", the welding amount can be controlled such that the height of the weld deposit is constant, and the weld quality can be improved. Accordingly, at least "offset amount" and "welding speed" can be selected as the control items.

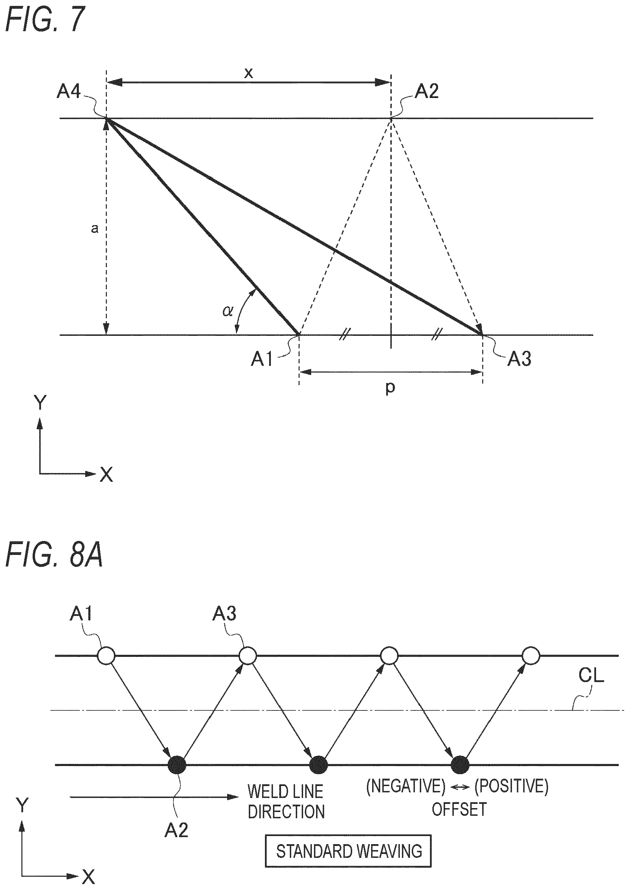

Here, in the present embodiment, as the type of the weaving pattern, "oblique swing" special weaving pattern where excellent welding can be performed even at a difficult position such as a vertical position or a horizontal position is selected. The oblique swing type weaving pattern refers to, for example, a trajectory illustrated in Fig. 7 where, when being offset to the negative side in the X-axis direction, that is, in the left direction in Fig. 7 with respect to one weaving end A2 in the weaving reference trajectory indicated by a broken line, the weaving end A2 of the weaving reference trajectory is changed to a weaving end A4 such that a triangular trajectory passing through weaving ends A1, A4, and A3 is formed. By predetermining a tilt angle $\alpha$ and providing an offset amount corresponding to the tilt angle $\alpha$, oblique swing with a shallow tilt or oblique swing with a deep tilt can be implemented. The tilt angle $\alpha$ may be set depending on a construction situation, and is one element for determining the oblique swing type weaving pattern.

To put the above description simply, as illustrated in Fig. 7, the oblique swing type weaving pattern can be determined by providing the tilt angle $\alpha$ as the element relating to the oblique swing type weaving pattern, and the pitch p and a weaving amplitude a calculated based on the gap that is input by the sensor or the like that are the elements relating to the weaving reference trajectory.

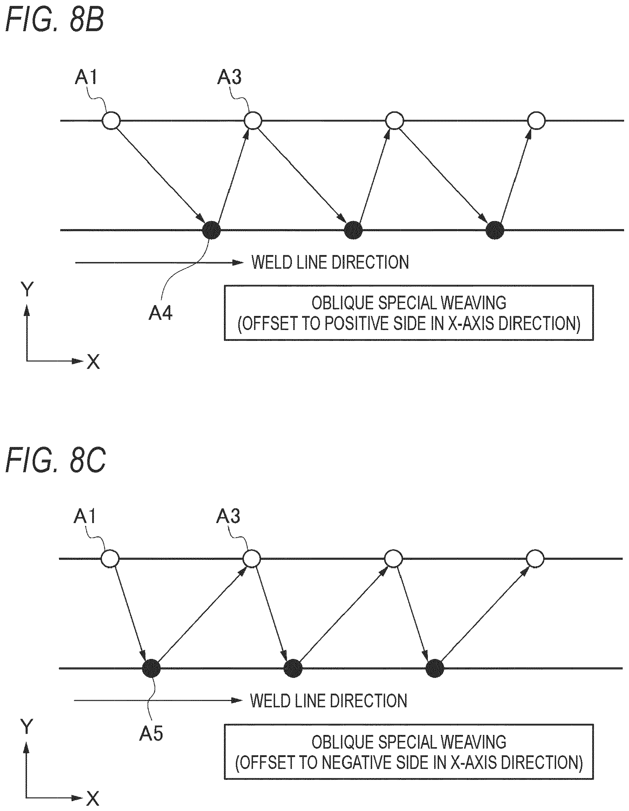

For example, by offsetting the weaving end A2 on the bottom plate side in Fig. 8A to the positive side in the X-axis direction to be changed to the position of the weaving end A4 in Fig. 8B based on the standard weaving pattern illustrated in Fig. 8A, that is, the weaving reference trajectory, an oblique swing type weaving pattern illustrated in Fig. 8B can be obtained. By offsetting the weaving end A2 to the negative side in the X-axis direction to change the weaving end A2 to a weaving end A5, an oblique swing type weaving pattern illustrated in Fig. 8C can be obtained.

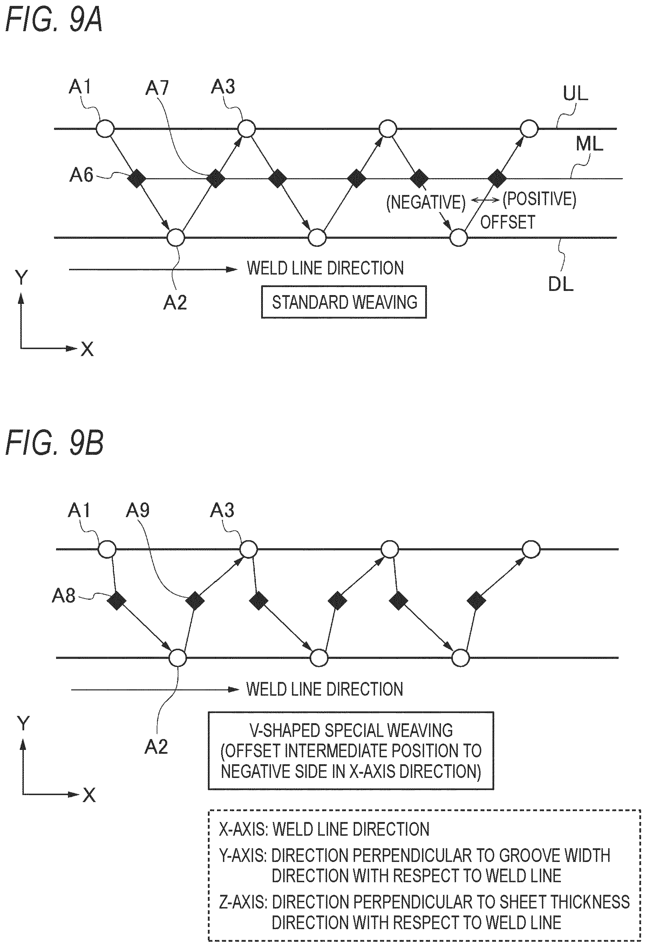

In one example of another weaving pattern, by offsetting weaving intermediate positions A6 and A7 represented by "♦" in Fig. 9A to the negative side in the X-axis direction to change the weaving intermediate positions A6 and A7 to weaving intermediate positions A8 and A9, respectively, based on the standard weaving pattern illustrated in Fig. 9A, that is, the weaving reference trajectory, a V-shaped weaving pattern illustrated in Fig. 9B can be obtained.

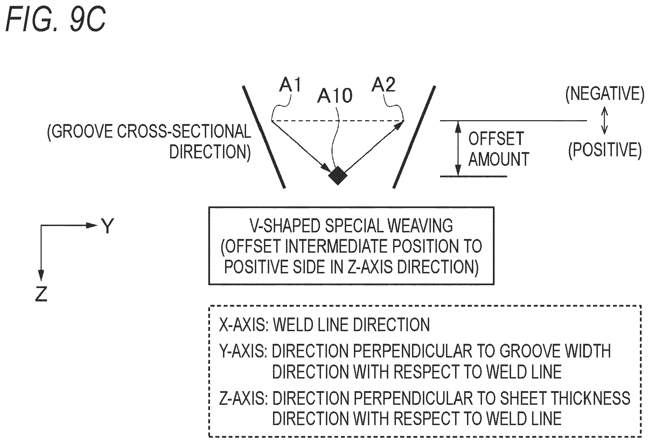

In each of the above-described examples, the weaving end is moved in a weld line direction, that is, on an X-Y plane, but the weaving end may be offset in a Z-axis direction depending on situation. Specifically, by offsetting the weaving intermediate positions A6 and A7 to the positive side in the Z-axis direction to change the weaving intermediate positions A6 and A7 to a weaving intermediate position A10, a V-shaped weaving pattern illustrated in Fig. 9C can be obtained.

Here, the point of which the direction and the distance of offset are changed in the offset amount can be changed to a weaving end in the weaving reference trajectory, that is, a position on UL or DL in Fig. 9A and to a weaving intermediate position, that is, any position on ML in Fig. 9A. The point is not limited to the above-described positions and can be set to any position.

In the oblique swing type weaving, the movement speed of the portable welding robot 100 in the X-axis direction, the movement speed of the welding torch 200 in the Y-axis direction, and the movement speed of the welding torch 200 in the Z-axis direction are synchronized and controlled, and the movement speeds in the X-axis, the Y-axis, and Z-axis are controlled such that the movements in the X-axis, the Y-axis, and the Z-axis to a target position are completed at the same time, for example, from the weaving end A1 to the weaving end A4 and from the weaving end A4 to the weaving end A3 with reference to Fig. 8B.

Hereinafter, in the present embodiment, the main items of the welding information in the DB for weaving control and preferable condition ranges thereof to be set will be described.

[Pitch]

The pitch p refers to a distance in which weaving is performed once as illustrated in Fig. 5, and is a set value required for examining the weaving of the portable welding robot. Therefore, it is preferable to adopt the pitch as the standard item. In general, other weaving conditions such as the welding speed, the amplitude, and the end stop time are determined based on the set value of the pitch p. The other values may be determined based on the pitch p and the welding speed. A range in which the pitch p is initially set or is set in the DB for weaving control is preferably 1 mm ≤ p ≤ 5 mm and more preferably 2.0 mm ≤ p ≤ 3.5 mm. When the pitch p is in a range of 1 mm ≤ p ≤ 5 mm, the weaving speed is appropriate, and the molten pool is easily formed. When the pitch p is in a range of 2.0 mm ≤ p ≤ 3.5 mm, the weaving speed appropriately changes at a gap of 3 to 10 mm. Therefore, the disturbance of the molten pool is small, and more stable welding can be performed.

[Offset Amount]

The offset amount is an important item for implementing special weaving. Therefore, it is preferable to adopt the offset amount as the control item. The weaving reference trajectory refers to the trajectory illustrated in Fig. 8A, and weaving can be performed in various trajectories by changing a direction and a distance of at least one predetermined point in one cycle of the weaving reference trajectory. In the present embodiment, the change of a direction and a distance of at least one predetermined point in one cycle of the weaving reference trajectory will be referred to as "offset amount".

The portable welding robot travels on a rail provided parallel to the weld line. Here, when the weld line direction is set as the X-axis direction (hereinafter, also referred to as "X-axis") for convenience of description, a direction perpendicular to the groove width direction with respect to the weld line is set as the Y-axis direction (hereinafter, also referred to as "Y-axis") for convenience of description, and a direction perpendicular to the sheet thickness with respect to the weld line is set as the Z-axis direction (hereinafter, also referred to as "Z-axis") for convenience of description, the rail is disposed along the X-axis direction, and a mechanism that performs weaving in at least one of the Y-axis direction and the Z-axis direction (hereinafter, also referred to as "weaving mechanism") is mounted on the robot body. In other words, the portable welding robot includes driving mechanisms of at least two axes, preferably at least the X-axis and the Y-axis, and more preferably at least three axes including the X, Y, and Z axes. It is still more preferable that the portable welding robot includes not only the orthogonal driving mechanisms of the X, Y, and Z axes but also a conchoidal approximate straight line motion mechanism that moves in the X-axis direction using the crank 170 in Fig. 2.

In the present embodiment, a traveling mechanism that travels on the rail and the weaving mechanism are not independent from each other and are mechanisms that are linked to each other along the same coordinate axis. Using the mechanism, the operations in the X, Y, and Z axes are controlled to perform weaving such that the movements to a target position are completed at the same time. In short, the weaving mechanism in the Y-axis direction and the traveling mechanism in the X-axis direction are controlled at the same time such that a predetermined weaving trajectory is formed. By synchronizing and controlling the weaving mechanism in the Y direction and the traveling mechanism in the X direction to be stopped at a weaving end, the effect of the welding speed can be removed during the end stop.

When the oblique swing type is selected as the weaving pattern, the offset amount to be applied to the DB for weaving control is set as an offset amount x in the X-axis direction and is preferably set in a range of preferably 0.5 mm ≤ x ≤ 15 mm and more preferably 1 mm ≤ x ≤ 12 mm. The offset amount x is represented by the following Expression (1).

$$x = p / 2 + a / \tan\alpha \quad ... \qquad (1)$$

Here, the items to be applied to Expression (1) are preferably set in ranges of the amplitude a = 0 to 10 mm, the pitch p = 1 to 5 mm, and the tilt angle α = 40 to 90°, and more preferably in ranges of the amplitude a = 0 to 10 mm, the pitch p = 2 to 3.5 mm, and the tilt angle α = 45 to 65°.

[Tilt Angle]

When the weaving pattern draws an oblique swing type trajectory, as illustrated in Fig. 7, the tilt angle α is set as the element relating to the weaving pattern, and the offset amount x corresponding to the tilt angle α and the other set values is extracted. The tilt angle α is an important item for determining the weaving pattern, and thus is preferably adopted as the standard item. A range in which the tilt angle α is initially set or is set to construct the DB for weaving control is preferably in a range of 40° ≤ α ≤ 90° and more preferably in a range of 45° ≤ α ≤ 65°.

In welding at a horizontal position, the molten pool is affected by gravity. Therefore, with the weaving method perpendicular to a gap direction, that is, in the weaving reference trajectory, it is difficult to obtain a sustainable stable arc. Thus, it is preferable to select the oblique swing type weaving pattern. At a gap of 0 mm to 10 mm, the tilt angle α is preferably set in 40° ≤ α ≤ 90°. At a gap of 3 mm to 10 mm, the tilt angle α is preferably set in 45° ≤ α ≤ 65°. As a result, a smooth bead shape can be obtained, and thus the risk of inducing welding defects can be reduced.

[Amplitude]

The amplitude a is a distance between both ends of a weaving width. In general, the same distance as the gap width may be set as the amplitude. Therefore, as in a gap G for the construction of the DB for weaving control, it is preferable that the amplitude a is set in a range of 3 mm ≤ a ≤ 10 mm, and it is more preferable that $0.6 \leq a/G \leq 0.9$ is satisfied in a range of 3 mm ≤ G ≤ 10 mm. When the gap G is less than 3 mm, it is preferable that weaving is not used, that is, the amplitude a is set as 0 or about 1 mm in the DB for weaving control from the viewpoint of forming a stable bead. As described above, the amplitude a only needs to vary depending on the gap width and thus is preferably selected as the control item.

[Welding Speed]

A range in which a welding speed V is initially set or is set to construct the DB for weaving control is preferably 30 mm / min ≤ V ≤ 400 mm / min and more preferably 50 mm / min ≤ V ≤ 180 mm / min. It is preferable that the welding speed V is selected as the control item and an optimum range corresponding to each of the gaps is set in the DB for weaving control. In the present embodiment, the welding speed V is set to follow the gap variation of 3 mm to 10 mm. When the welding speed V is 180 mm / min or lower at the gap of 3 mm, it is easy to ensure a period of time for melting a root. When the welding speed V is 50 mm / min or higher, a period of time for which an arc remains in the molten metal decreases, the molten metal is not likely to fall due to the effect of gravity, and the shape of the weld bead tends to be improved.

By setting the welding speed V to be 400 mm / min or lower at the gap of 0 mm, a stable arc and a back bead can be acquired. At any gap in a range of 3 mm to 10 mm, a range in which the welding speed is initially set or is set to construct the DB for weaving control is preferably 30 mm / min ≤ V ≤ 400 mm / min.

[End Stop Time]

At a horizontal position, a preferable range in which the end stop time is initially set or is set to construct the DB for weaving control varies between an end stop time on an upper side (hereinafter, also referred to as "upper end stop time") and an end stop time on a lower side (hereinafter, also referred to as "lower end stop time"). Therefore, the upper end stop time and the lower end stop time are set independently. The end stop time is an item that preferably varies depending on a welding situation such as a change in gap, and thus may be used as the control item.

A range in which an upper end stop time $T_{up}$ is initially set or is set to construct the DB for weaving control is preferably 0 ms ≤ $T_{up}$ ≤ 1500 ms and more preferably 100 ms ≤ $T_{up}$ ≤ 1200 ms. It is preferable that an optimum range of the upper end stop time $T_{up}$ is determined depending on the gap. In the present embodiment, a preferable range is shown as the upper end stop time $T_{up}$ suitable for following the gap variation of 3 mm to 10 mm. The lower limit value of the upper end stop time $T_{up}$ does not need to be provided from the viewpoint of forming a back bead, but the upper end stop has a purpose of supplying a weld metal amount required to make a weld bead shape in a groove to be flat.

It is more preferable that the upper end stop time $T_{up}$ is set to be 100 ms or longer at the gap of 3 mm. When the upper end stop time $T_{up}$ is set in a range of 1500 ms or shorter at the gap of 10 mm, a period of time for which an arc remains in the molten metal is appropriate and an effect of preventing the falling of the molten metal is obtained. From the viewpoint of forming a strong back bead and further flattening a bead shape in a groove, it is more preferable that the upper end stop time $T_{up}$ is set in a range of 1200 ms or shorter.

A range in which a lower end stop time $T_{down}$ is initially set or is set to construct the DB for weaving control is preferably 0 ms ≤ $T_{down}$ ≤ 500 ms and more preferably 0 ms ≤ $T_{down}$ ≤ 100 ms. In the first layer, from the viewpoint of forming a back bead, there is no effect of the lower end stop time $T_{down}$. Therefore, the lower limit value of the lower end stop time $T_{down}$ does not need to be provided. On the other hand, when the lower end stop time is 500 ms or shorter, an overlap shape is more likely to be prevented at a lower end. When the gap varies in a range of 3 mm to 10 mm, a stable bead shape in a groove can be obtained in the entire gap range. Therefore, it is more preferable that the lower end stop time $T_{down}$ is set in a range of 0 ms ≤ $T_{down}$ < 100 ms.

[Weaving Reference Line]

The weaving reference line is set as a reference position mainly when a control of, for example, increasing or decreasing the weaving width in arc tracking or the like is performed. Basically, the weaving reference line may be initially set and optionally may be included in the DB for weaving control as the control item. For example, when the gap is set as the control reference item, the weaving reference line may be controlled based on the gap variation.

For example, in the present embodiment at a horizontal position, as indicated by WBL in Fig. 2, a weaving end on a side far from the device body is set as the weaving reference line, and a weaving control of, for example, increasing or decreasing the weaving width is performed. The weaving reference line is not limited to the present embodiment. For example, a weaving center position may be set as the weaving reference line such that a control of equally increasing or decreasing the weaving width on both sides may be performed.

Hereinabove, the embodiment relating to the weaving control method according to the present invention has been described. However, the present invention is not limited to the above-described embodiment, and modifications, improvements, and the like can be appropriately made.

As described above, the present specification discloses the following features.

(1) A weaving control method using a welding control device for controlling a welding device, in which

the welding control device includes a database that is constructed such that,
when an information group including at least construction information, welding condition information, and weaving information is set as welding information,
a control reference item selected from at least one item in the welding information and a control item selected from at least one item in the welding information are associated and stored for every standard item selected from at least one item in the welding information, and
the control item includes at least an offset amount for changing a direction and a distance of at least one predetermined point in one cycle of a weaving reference trajectory in the weaving information,
the standard item, the control reference item, and the control item are items in the welding information that are different from each other, and
the weaving control method includes a step of extracting at least the offset amount from the database based on an input measured value of the control reference item.
With such configuration, even when a simple welding device including a driving portion such as a portable welding robot or a carriage is used, welding can be performed in any weaving pattern, and the configuration is applicable to various construction situations such as welding at a difficult position such as a vertical position or a horizontal position.

(2) The weaving control method according to (1), in which

the database
includes at least one item among the weaving information and the welding condition information other than the offset amount as the control item, and
further extracts a condition regarding the item from the database based on the input measured value of the control reference item.
With such configuration, a more optimum weaving pattern can be extracted.

(3) The weaving control method according to (1) or (2), in which

at least a pitch that is a distance between weaving ends adjacent to each other on one side with respect to a weld center line in the weaving reference trajectory is included as the item of the weaving information, and the pitch is selected as the standard item.
With such configuration, an optimum weaving pattern can be extracted based on the pitch.

(4) The weaving control method according to any one of (1) to (3), in which

at least a gap is included as the item of the construction information, and
the gap is select as the control reference item.
With such configuration, an optimum weaving pattern can be extracted based on the gap.

(5) The weaving control method according to any one of (1) to (4), in which

at least one of a welding current, an arc voltage, a feed speed, and a welding speed is included as the item of the welding condition information, and
at least one of the welding current, the arc voltage, the feed speed, and the welding speed is selected as the control reference item or the control item.
With such configuration, the welding current, the arc voltage, the feed speed, or the welding speed can be selected as the welding condition setting information, and an optimum weaving pattern can be extracted based on the selected information.

(6) The weaving control method according to any one of (1) to (3), in which

at least a gap is included as the item of the construction information,
at least one of a welding current, an arc voltage, a feed speed, and a welding speed is included as the item of the welding condition information, and
when at least one of the gap, the welding current, the arc voltage, the feed speed, and the welding speed is selected as the control reference item, the measured value of the control reference item is frequently updated during welding.
With such configuration, excellent welding can be performed according to a change in welding condition by frequently updating the measured value of at least one of the gap, the welding current, the arc voltage, the feed speed, and the welding speed during welding.

(7) The weaving control method according to (3), in which

at least a gap is included as the item of the construction information, and

the offset amount is extracted based on at least the pitch and the gap.

With such configuration, an optimum weaving pattern can be extracted based on the pitch and the gap.

(8) The weaving control method according to any one of (1) to (7), in which

at least one of a position of a weaving end and a weaving intermediate position in the weaving reference trajectory is included as the point of which the direction and the distance are changed in the offset amount.

With such configuration, any weaving pattern can be obtained.

(9) The weaving control method according to any one of (1) to (8), in which

at least the database corresponding to an oblique swing weaving pattern is included.

With such configuration, excellent welding can be performed even at a difficult position such as a vertical position or a horizontal position by applying the oblique swing weaving pattern.

(10) The weaving control method according to (9), in which

when the oblique swing weaving pattern is selected,

at least one point of a weaving end in one cycle of the weaving reference trajectory is moved along the weld center line by any distance as the offset amount.

With such configuration, an optimum weaving pattern can be set.

(11) The weaving control method according to any one of (1) to (11), in which

at least one of a weaving amplitude, a stop time at a weaving end, and a weaving reference position is included as the item of the weaving information other than the offset amount, and at least one of a welding current, an arc voltage, and a welding speed is included as the item of the welding condition information.

With such configuration, excellent welding can be performed by setting the weaving conditions and the welding conditions.

(12) A welding control device for controlling a welding device, in which

the welding control device includes a database that is constructed such that,

when an information group including at least construction information, welding condition information, and weaving information is set as welding information,

a control reference item selected from at least one item in the welding information and a control item selected from at least one item in the welding information are associated and stored for every standard item selected from at least one item in the welding information, and

the control item includes at least an offset amount for changing a direction and a distance of at least one predetermined point in one cycle of a weaving reference trajectory in the weaving information,

the standard item, the control reference item, and the control item are items in the welding information that are different from each other, and

the welding control device has a function of extracting at least the offset amount from the database based on an input measured value of the control reference item.

With such configuration, even when a simple welding device including a driving portion such as a portable welding robot or a carriage is used, welding can be performed in any weaving pattern, and the configuration is applicable to various construction situations such as welding at a difficult position such as a vertical position or a horizontal position.

(13) A welding system including a welding control device for controlling a welding device, in which

the welding control device includes a database that is constructed such that,

when an information group including at least construction information, welding condition information, and weaving information is set as welding information,

a control reference item selected from at least one item in the welding information and a control item selected from at least one item in the welding information are associated and stored for every standard item selected from at least one item in the welding information, and

the control item includes at least an offset amount for changing a direction and a distance of at least one predetermined point in one cycle of a weaving reference trajectory in the weaving information,

the standard item, the control reference item, and the control item are items in the welding information that are different from each other, and

the welding control device has a function of extracting at least the offset amount from the database based on an input measured value of the control reference item.

With such configuration, even when a simple welding device including a driving portion such as a portable welding robot or a carriage is used, welding can be performed in any weaving pattern, and the configuration is applicable to various construction situations such as welding at a difficult position such as a vertical position or a horizontal position.

(14) A weaving control program causing a welding control device for controlling a welding device to perform a weaving control, in which

the welding control device includes a database that is constructed such that,
when an information group including at least construction information, welding condition information, and weaving information is set as welding information,
a control reference item selected from at least one item in the welding information and a control item selected from at least one item in the welding information are associated and stored for every standard item selected from at least one item in the welding information, and
the control item includes at least an offset amount for changing a direction and a distance of at least one predetermined point in one cycle of a weaving reference trajectory in the weaving information,
the standard item, the control reference item, and the control item are items in the welding information that are different from each other, and
the weaving control program causes the welding control device to execute a function of extracting at least the offset amount from the database based on an input measured value of the control reference item.

With such configuration, even when a simple welding device including a driving portion such as a portable welding robot or a carriage is used, welding can be performed in any weaving pattern, and the configuration is applicable to various construction situations such as welding at a difficult position such as a vertical position or a horizontal position.

Hereinabove, various embodiments have been described with reference to the drawings, but it is needless to say that the present invention is not limited to the examples. It is obvious to those skilled in the art that various modification examples or alteration examples can be conceived within the scope of the claims, and it is understood that such examples also fall within the technical scope of the present invention. Within a range not departing from the scope of the invention, the respective components of the above-described embodiment can be combined as appropriate.

The present application is based on Japanese Patent Application No. 2021-156168 filed on September 24, 2021, the content of which is incorporated herein by reference.

REFERENCE SIGNS LIST

50: welding system
100: portable welding robot
600: welding control device
A1, A2, A3, A4, A5: weaving end
A6, A7: weaving intermediate position
a: weaving amplitude
CL: weld center line
p: pitch
WBL: weaving reference position
x: offset amount

**Claims**

1. A weaving control method using a welding control device for controlling a welding device, wherein

the welding control device includes a database that is constructed such that,
when an information group including at least construction information, welding condition information, and weaving information is set as welding information,
a control reference item selected from at least one item in the welding information and a control item selected from at least one item in the welding information are associated and stored for every standard item selected from at least one item in the welding information, and
the control item includes at least an offset amount for changing a direction and a distance of at least one predetermined point in one cycle of a weaving reference trajectory in the weaving information,
the standard item, the control reference item, and the control item are items in the welding information that are different from each other, and
the weaving control method includes a step of extracting at least the offset amount from the database based on an input measured value of the control reference item.

2. The weaving control method according to claim 1, wherein

the database
includes at least one item among the weaving information and the welding condition information other than the offset amount as the control item, and
further extracts a condition regarding the item from the database based on the input measured value of the control reference item.

3. The weaving control method according to claim 1 or 2, wherein

at least a pitch that is a distance between weaving ends adjacent to each other on one side with respect to a weld center line in the weaving reference trajectory is included as the item of the weaving information, and
the pitch is selected as the standard item.

4. The weaving control method according to claim 1 or 2, wherein

at least a gap is included as the item of the construction information, and
the gap is select as the control reference item.

5. The weaving control method according to claim 3, wherein

at least a gap is included as the item of the construction information, and
the gap is select as the control reference item.

6. The weaving control method according to claim 1 or 2, wherein

at least one of a welding current, an arc voltage, a feed speed, and a welding speed is included as the item of the welding condition information, and
at least one of the welding current, the arc voltage, the feed speed, and the welding speed is selected as the control reference item or the control item.

7. The weaving control method according to claim 3, wherein

at least one of a welding current, an arc voltage, a feed speed, and a welding speed is included as the item of the welding condition information, and
at least one of the welding current, the arc voltage, the feed speed, and the welding speed is selected as the control reference item or the control item.

8. The weaving control method according to claim 4, wherein

at least one of a welding current, an arc voltage, a feed speed, and a welding speed is included as the item of the welding condition information, and
at least one of the welding current, the arc voltage, the feed speed, and the welding speed is selected as the control reference item or the control item.

9. The weaving control method according to claim 1 or 2, wherein

at least a gap is included as the item of the construction information,
at least one of a welding current, an arc voltage, a feed speed, and a welding speed is included as the item of the welding condition information,
when at least one of the gap, the welding current, the arc voltage, the feed speed, and the welding speed is selected as the control reference item, and
the measured value of the control reference item is frequently updated during welding.

10. The weaving control method according to claim 3, wherein

at least a gap is included as the item of the construction information,
at least one of a welding current, an arc voltage, a feed speed, and a welding speed is included as the item of the welding condition information,
when at least one of the gap, the welding current, the arc voltage, the feed speed, and the welding speed is selected as the control reference item, and
the measured value of the control reference item is frequently updated during welding.

11. The weaving control method according to claim 3, wherein

at least a gap is included as the item of the construction information, and
the offset amount is extracted based on at least the pitch and the gap.

12. The weaving control method according to claim 1 or 2, wherein
at least one of a position of a weaving end and a weaving intermediate position in the weaving reference trajectory is included as the point of which the direction and the distance are changed in the offset amount.

13. The weaving control method according to claim 1 or 2, wherein
at least the database corresponding to an oblique swing weaving pattern is included.

14. The weaving control method according to claim 9, wherein

when the oblique swing weaving pattern is selected, and
at least one point of a weaving end in one cycle of the weaving reference trajectory is moved along the weld center line by any distance as the offset amount.

15. The weaving control method according to claim 1 or 2, wherein

at least one of a weaving amplitude, a stop time at a weaving end, and a weaving reference position is included as the item of the weaving information other than the offset amount, and
at least one of a welding current, an arc voltage, and a welding speed is included as the item of the welding condition information.

16. A welding control device for controlling a welding device, wherein

the welding control device includes a database that is constructed such that,
when an information group including at least construction information, welding condition information, and weaving information is set as welding information,
a control reference item selected from at least one item in the welding information and a control item selected from at least one item in the welding information are associated and stored for every standard item selected from at least one item in the welding information, and
the control item includes at least an offset amount for changing a direction and a distance of at least one predetermined point in one cycle of a weaving reference trajectory in the weaving information,
the standard item, the control reference item, and the control item are items in the welding information that are different from each other, and
the welding control device has a function of extracting at least the offset amount from the database based on an input measured value of the control reference item.

17. A welding system comprising a welding control device for controlling a welding device, wherein

the welding control device includes a database that is constructed such that,
when an information group including at least construction information, welding condition information, and weaving information is set as welding information,
a control reference item selected from at least one item in the welding information and a control item selected from at least one item in the welding information are associated and stored for every standard item selected from at least one item in the welding information, and
the control item includes at least an offset amount for changing a direction and a distance of at least one predetermined point in one cycle of a weaving reference trajectory in the weaving information,
the standard item, the control reference item, and the control item are items in the welding information that are different from each other, and
the welding control device has a function of extracting at least the offset amount from the database based on an input measured value of the control reference item.

18. A weaving control program causing a welding control device for controlling a welding device to perform a weaving control, wherein

the welding control device includes a database that is constructed such that,
when an information group including at least construction information, welding condition information, and weaving information is set as welding information,
a control reference item selected from at least one item in the welding information and a control item selected from at least one item in the welding information are associated and stored for every standard item selected from at least one item in the welding information, and
the control item includes at least an offset amount for changing a direction and a distance of at least one predetermined point in one cycle of a weaving reference trajectory in the weaving information,
the standard item, the control reference item, and the control item are items in the welding information that are different from each other, and
the weaving control program causes the welding control device to execute a function of extracting at least the offset amount from the database based on an input measured value of the control reference item.

FIG. 1

EP 4 389 336 A1

FIG. 2

EP 4 389 336 A1

FIG. 3

FIG. 4

```
        ( START OF WELDING WORK )
                    |
                    v
        +---------------------------+
        |   SET AND CORRECT PROGRAM |—— S1
        +---------------------------+
                    |
                    v
        +---------------------------+
        |       START PROGRAM       |—— S2
        +---------------------------+
                    |
                    v  <-------------------------+
        +---------------------------+            |
        |   START WELDING (ARC ON)  |—— S3       |
        +---------------------------+            |
                    |                            |
                    v                            |
        +---------------------------+            |
        | FREQUENTLY ACQUIRE MEASURED|           |
        |   VALUE OF PREDETERMINED   |—— S4      |
        |   CONTROL REFERENCE ITEM   |           |
        +---------------------------+            |
                    |                            |
                    v                            |
        +---------------------------+            |
        |   EXTRACT INFORMATION OF   |           |
        | EACH CONTROL ITEM BASED ON |—— S5      |
        |     MEASURED VALUE AND     |           |
        |   DB FOR WEAVING CONTROL   |           |
        +---------------------------+            |
                    |                            |
                    v                            |
        +---------------------------+            |
        | REFLECT EACH PIECE OF OBTAINED|—— S6   |
        |   INFORMATION ON WELDING   |           |
        +---------------------------+            |
                    |                            |
                    v                            |
        +---------------------------+            |
        |  COMPLETE WELDING (ARC OFF)|—— S7      |
        +---------------------------+            |
                    |                            |
                    v            S8              |
               /           \                    |
              /  IS PROGRAM  \      NO           |
             <   COMPLETED?   >------------------+
              \             /
               \           /
                   | YES
                   v
        ( END OF WELDING WORK )
```

*FIG. 5*

A2    A4    An

CL

A1  PITCH p  A3

WELDING SECTION (p × n)

Y

X

## FIG. 6

TYPE OF WEAVING PATTERN: OBLIQUE SWING (STANDARD ITEM)

(CONTROL REFERENCE ITEM)

< WIRE A >

| (CONTROL ITEM) | | TILT ANGLE α = 45°, PITCH p = 3.0 mm | | | | TILT ANGLE α = 50°, PITCH p = 3.0 mm | | | | TILT ANGLE α = 55°, PITCH p = 3.0 mm | | | |
|---|---|---|---|---|---|---|---|---|---|---|---|---|---|
| | GAP [mm] | 9 | 7 | 5 | 3 | 9 | 7 | 5 | 3 | 9 | 7 | 5 | 3 |
| | WELDING CURRENT [A] | a1 | a2 | a3 | a4 | a5 | a6 | a7 | a8 | a9 | a10 | a11 | a12 |
| | ARC VOLTAGE [V] | b1 | b2 | b3 | b4 | b5 | b6 | b7 | b8 | b9 | b10 | b11 | b12 |
| | WELDING SPEED [mm / min] | c1 | c2 | c3 | c4 | c5 | c6 | c7 | c8 | c9 | c10 | c11 | c12 |
| | OFFSET AMOUNT [mm] | d1 | d2 | d3 | d4 | d5 | d6 | d7 | d8 | d9 | d10 | d11 | d12 |
| | WEAVING AMPLITUDE [mm] | e1 | e2 | e3 | e4 | e5 | e6 | e7 | e8 | e9 | e10 | e11 | e12 |
| | END STOP TIME (BOTTOM PLATE) [ms] | f1 | f2 | f3 | f4 | f5 | f6 | f7 | f8 | f9 | f10 | f11 | f12 |
| | END STOP TIME (STANDING PLATE) [ms] | g1 | g2 | g3 | g4 | g5 | g6 | g7 | g8 | g9 | g10 | g11 | g12 |

...

(CONT.)

(FIG. 6 CONTINUED)

| < WIRE B > | TILT ANGLE α = 45°, PITCH p = 2.5 mm | | | | TILT ANGLE α = 50°, PITCH p = 2.5 mm | | | | TILT ANGLE α = 55°, PITCH p = 2.5 mm | | | |
|---|---|---|---|---|---|---|---|---|---|---|---|---|
| GAP [mm] | 9 | 7 | 5 | 3 | 9 | 7 | 5 | 3 | 9 | 7 | 5 | 3 |
| WELDING CURRENT [A] | h1 | h2 | h3 | h4 | h5 | h6 | h7 | h8 | h9 | h10 | h11 | h12 |
| ARC VOLTAGE [V] | i1 | i2 | i3 | i4 | i5 | i6 | i7 | i8 | i9 | i10 | i11 | i12 |
| WELDING SPEED [mm / min] | j1 | j2 | j3 | j4 | j5 | j6 | j7 | j8 | j9 | j10 | j11 | j12 |
| OFFSET AMOUNT [mm] | k1 | k2 | k3 | k4 | k5 | k6 | k7 | k8 | k9 | k10 | k11 | k12 |
| WEAVING AMPLITUDE [mm] | l1 | l2 | l3 | l4 | l5 | l6 | l7 | l8 | l9 | l10 | l11 | l12 |
| END STOP TIME (BOTTOM PLATE) [ms] | m1 | m2 | m3 | m4 | m5 | m6 | m7 | m8 | m9 | m10 | m11 | m12 |
| END STOP TIME (STANDING PLATE) [ms] | n1 | n2 | n3 | n4 | n5 | n6 | n7 | n8 | n9 | n10 | n11 | n12 |

• • •

*FIG. 7*

*FIG. 8A*

*FIG. 8B*

A1    A3

WELD LINE DIRECTION

Y

A4

OBLIQUE SPECIAL WEAVING
(OFFSET TO POSITIVE SIDE IN X-AXIS DIRECTION)

X

*FIG. 8C*

A1    A3

WELD LINE DIRECTION

Y

A5

OBLIQUE SPECIAL WEAVING
(OFFSET TO NEGATIVE SIDE IN X-AXIS DIRECTION)

X

EP 4 389 336 A1

*FIG. 9A*

A1  A7  A3  UL  ML

A6  (NEGATIVE) ↔ (POSITIVE)  OFFSET

Y

A2  WELD LINE DIRECTION  DL

STANDARD WEAVING

X

*FIG. 9B*

A1  A9  A3

A8

Y

A2  WELD LINE DIRECTION

V-SHAPED SPECIAL WEAVING
(OFFSET INTERMEDIATE POSITION TO
NEGATIVE SIDE IN X-AXIS DIRECTION)

X

X-AXIS: WELD LINE DIRECTION

Y-AXIS: DIRECTION PERPENDICULAR TO GROOVE WIDTH
DIRECTION WITH RESPECT TO WELD LINE

Z-AXIS: DIRECTION PERPENDICULAR TO SHEET THICKNESS
DIRECTION WITH RESPECT TO WELD LINE

## FIG. 9C

(GROOVE CROSS-SECTIONAL DIRECTION)

A1　A10　A2

(NEGATIVE)

(POSITIVE)

OFFSET AMOUNT

Y

Z

V-SHAPED SPECIAL WEAVING
(OFFSET INTERMEDIATE POSITION TO POSITIVE SIDE IN Z-AXIS DIRECTION)

X-AXIS: WELD LINE DIRECTION

Y-AXIS: DIRECTION PERPENDICULAR TO GROOVE WIDTH DIRECTION WITH RESPECT TO WELD LINE

Z-AXIS: DIRECTION PERPENDICULAR TO SHEET THICKNESS DIRECTION WITH RESPECT TO WELD LINE

## FIG. 10A

WELD LINE DIRECTION

MECHANISM WHERE MECHANISM FOR
PROVIDING AMPLITUDE IN ROOT GAP DIRECTION
IS PROVIDED IN TRAVELING CARRIAGE

AFFECTED BY WELDING SPEED DURING END STOP

## FIG. 10B

WELD LINE DIRECTION

MOVING OF SKILLED TECHNICIAN
(IN CASE OF END STOP)

STOP AT SAME POSITION

<h2 style="text-align:center">INTERNATIONAL SEARCH REPORT</h2>

| International application No. |
|---|
| **PCT/JP2022/014987** |

**A. CLASSIFICATION OF SUBJECT MATTER**

*B23K 9/12*(2006.01)i; *B23K 9/095*(2006.01)i
FI: B23K9/12 350F; B23K9/12 350Z; B23K9/095 505B

According to International Patent Classification (IPC) or to both national classification and IPC

**B. FIELDS SEARCHED**

Minimum documentation searched (classification system followed by classification symbols)

B23K9/12; B23K9/095

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 3-18478 A (SHIN MEIWA IND CO LTD) 28 January 1991 (1991-01-28) <br> claim 1, p. 3, upper left column, line 3 to p. 9, lower right column, line 19, fig. 1-7 | 1-2, 4, 6, 8-9, 12, 13, 15-18 |
| A | | 3, 5, 7, 10-11, 14 |
| A | JP 51-128663 A (MATSUSHITA ELECTRIC IND CO LTD) 09 November 1976 (1976-11-09) <br> p. 1, lower left column, line 18 to p. 4, lower right column, line 14, fig. 9-15 | 1-18 |
| A | WO 2019/151088 A1 (KABUSHIKI KAISHA KOBE SEIKO SHO (KOBE STEEL, LTD.)) 08 August 2019 (2019-08-08) <br> paragraphs [0025]-[0094], fig. 1-21 | 1-18 |
| A | JP 62-173086 A (ISHIKAWAJIMA HARIMA HEAVY IND CO LTD) 29 July 1987 (1987-07-29) <br> claim 1, p. 2, lower left column, line 5 to p. 3, upper right column, line 8, fig. 1-9 | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 May 2022** | **31 May 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/014987**

| Patent document cited in search report | | | Publication date (day/month/year) | Patent family member(s) | | | Publication date (day/month/year) |
|---|---|---|---|---|---|---|---|
| JP | 3-18478 | A | 28 January 1991 | US | 5206474 | A | |
| | | | | claim 1, column 5, line 34 to column 23, line 34, fig. 1, 8-14 | | | |
| | | | | WO | 1990/015686 | A1 | |
| | | | | EP | 428755 | A1 | |
| JP | 51-128663 | A | 09 November 1976 | (Family: none) | | | |
| WO | 2019/151088 | A1 | 08 August 2019 | US | 2020/0384563 | A1 | |
| | | | | paragraphs [0099]-[0283], fig. 1-21 | | | |
| | | | | EP | 3747586 | A1 | |
| | | | | KR | 10-2020-0098697 | A | |
| | | | | CN | 111655417 | A | |
| JP | 62-173086 | A | 29 July 1987 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014534083 A

- JP 2021156168 A